(19) **Europäisches Patentamt / European Patent Office / Office européen des brevets**

(11) **EP 4 106 427 B1**

(12) **EUROPEAN PATENT SPECIFICATION**

(45) Date of publication and mention
of the grant of the patent:
**27.08.2025 Bulletin 2025/35**

(21) Application number: **21757415.1**

(22) Date of filing: **07.02.2021**

(51) International Patent Classification (IPC):
**H04W 72/23** (2023.01) **H04L 5/00** (2006.01)
**H04W 72/02** (2009.01) **H04W 72/51** (2023.01)

(52) Cooperative Patent Classification (CPC):
**H04W 72/23;** H04L 5/0053; H04W 72/02;
H04W 72/51

(86) International application number:
**PCT/CN2021/075886**

(87) International publication number:
**WO 2021/164601 (26.08.2021 Gazette 2021/34)**

(54) **INFORMATION TRANSMISSION METHOD AND APPARATUS, RELATED DEVICE, AND STORAGE MEDIUM**

INFORMATIONSÜBERTRAGUNGSVERFAHREN UND -VORRICHTUNG, ZUGEHÖRIGE VORRICHTUNG UND SPEICHERMEDIUM

PROCÉDÉ ET APPAREIL DE TRANSMISSION D'INFORMATIONS, DISPOSITIF ASSOCIÉ ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2020 CN 202010096474**
**30.12.2020 CN 202011614603**

(43) Date of publication of application:
**21.12.2022 Bulletin 2022/51**

(73) Proprietors:
• **China Mobile Communication Co., Ltd Research Institute**
**Beijing 100053 (CN)**
• **China Mobile Communications Group Co., Ltd.**
**Beijing 100032 (CN)**

(72) Inventors:
• **HU, Lijie**
**Beijing 100053 (CN)**
• **XU, Xiaodong**
**Beijing 100053 (CN)**
• **YANG, Tuo**
**Beijing 100053 (CN)**
• **WANG, Fei**
**Beijing 100053 (CN)**

• **WANG, Qixing**
**Beijing 100053 (CN)**
• **LI, Nan**
**Beijing 100053 (CN)**

(74) Representative: **J A Kemp LLP**
**80 Turnmill Street**
**London EC1M 5QU (GB)**

(56) References cited:
EP-A1- 3 471 469 WO-A1-2014/023026
WO-A1-2020/032771 CN-A- 104 640 212
CN-A- 109 600 833 CN-A- 110 392 428
US-A1- 2019 007 965

• ZTE: "Higher layer support of Reduced Capability NR devices", vol. RAN WG1, no. e-Meeting; 20210125 - 20210205, 18 January 2021 (2021-01-18), XP051970454, Retrieved from the Internet <URL:https://ftp.3gpp.org/tsg_ran/WG1_RL1/TSGR1_104-e/Docs/R1-2100565.zip R1-2100565 Higher layer support of RedCap UEs.doc> [retrieved on 20210118]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- ANONYMOUS: "3rd Generation Partnership Project; Technical Specification Group Radio Access Network; NR; Radio Resource Control (RRC) protocol specification (Release 15)", vol. RAN WG2, no. V15.8.0, 8 January 2020 (2020-01-08), pages 1 - 532, XP051860598, Retrieved from the Internet <URL:ftp://ftp.3gpp.org/Specs/archive/38_series/38.331/38331-f80.zip 38331-f80.docx> [retrieved on 20200108]
- SPREADTRUM COMMUNICATIONS: "Barring information signalling for 5G unified access control", 3GPP DRAFT; R2-1809557, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20180702 - 20180706, 1 July 2018 (2018-07-01), Mobile Competence Centre ; 650, route des Lucioles ; F-06921 Sophia-Antipolis Cedex ; France, XP051466833

# Description

## TECHNICAL FIELD

The present application relates to the field of wireless communication, in particular to an information transmission method applied to a network device, an information transmission method applied to a terminal, a network device, a terminal and a storage medium.

## BACKGROUND

Reduced Capability New Radio (NR) Devices, or NR Light, also called RedCap terminals for short, support application scenarios such as industrial sensing devices, wearable devices, and video surveillance. Herein, for the industrial sensing device scenario, it may mean that there are a large number of sensing devices in a certain space, such as pressure sensors, humidity sensors, thermometers, motion sensors, accelerometers, actuators, etc. If these devices are accessed to a network at the same time, the network access pressure may be greater, which may cause congestion. In addition, with the popularization of video surveillance and wearable devices, the reduced capability NR devices are superimposed on ordinary terminals (such as enhanced Mobile Broadband (eMBB) service terminals (also called eMBB terminals) and/or Ultra-Reliable Low-Latency Communications (URLLC) terminals (URLLC terminals for short)), which may further increase the access volume and bring greater pressure on terminal access. Related technologies can at least be found in patent documents EP 3471469 A1 and WO 2020/032771 A1. EP 3471469 A1 relates to a method for a terminal to receive a synchronization signals. WO 2020/032771 A1 relates to a cell access method of a terminal in a wireless communication system.

## SUMMARY

Embodiments of the present application provide an information transmission method and apparatus, a related device, and a storage medium. The invention is set out in the appended set of claims.

In the information transmission method and apparatus, the related device, and the storage medium provided by the embodiments of the present application, the network device sends the indication information to the terminal. The indication information indicates at least one of the following: at least one time and/or frequency domain resource, the at least one time and/or frequency domain resource being used for the terminal to determine the time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority. In the solutions provided by the embodiments of the present application, since the indication information is sent to the terminal, the terminal may select the time and/or frequency domain resource according to the indication information, and different terminals are shunt into different time and/or frequency domain resources, so that the collision of terminals may be avoided, the network congestion may be avoided, and the user experience may be improved.

## BRIEF DESCRIPTION OF THE DRAWINGS

FIG. 1 is a flowchart of accessing a carrier by a terminal of a NR system.

FIG. 2 is a schematic diagram of indicating a time and/or frequency domain resource by indication information using a bitmap according to an embodiment of the present application.

FIG. 3 is a schematic diagram of indicating a BWP of a low-cost terminal through a SIB1 message according to an embodiment of the present application.

FIG. 4 is a schematic diagram of indicating a BWP of a NR light terminal through a SSB according to an embodiment of the present application.

FIG. 5 is a flowchart of an information transmission method according to an embodiment of the present application.

FIG. 6 is a flowchart of another information transmission method according to an embodiment of the present application.

FIG. 7 is a schematic structural diagram of an information transmission apparatus according to an embodiment of the present application, which is not covered by the claims.

FIG. 8 is a schematic structural diagram of another information transmission apparatus according to an embodiment of the present application, which is not covered by the claims.

FIG. 9 is a schematic structural diagram of a network device according to an embodiment of the present application.

FIG. 10 is a schematic structural diagram of a terminal according to an embodiment of the present application.

FIG. 11 is a schematic structural diagram of an information transmission system according to an embodiment of the present application.

DETAILED DESCRIPTION

The present application is described in detail below with reference to the drawings and embodiments.

In the related art, the access process in a NR system includes that: first, a terminal performs cell search, that is, SSB search, to obtain cell synchronization. Then, after obtaining cell synchronization, the terminal obtains CORESET#0, that is, an initial BWP, through a PBCH in the SSB, further obtains a system information on CORESET#0, and performs a corresponding random access operation on the corresponding initial UL BWP. If the SSB is only sent on one frequency point in a cell, all terminals access through the initial UL BWP. When there are a large number of terminals, access resource collision may be caused, resulting in terminal access failure.

In the NR system, in order to improve the coverage performance, a Supplementary UpLink (SUL) carrier is introduced as a supplementary carrier for UL, and is broadcast in a SIB1. During the initial access process, the terminal determines whether to use SUL for random access or normal UL carrier access (this access technology may be called SUL technology) according to the measured DL signal strength. Specifically, when the Reference Signal Receiving Power (RSRP) of a channel is lower than a certain threshold, the UL BWP of the SUL is used for random access, otherwise the UL carrier of a normal carrier is used for access.

After the introduction of a NR light terminal, the problem of access resource collision that may be caused by accessing the system by a large number of terminals at the same time needs to be solved. Although the SUL technology may alleviate the congestion of UL random access to a certain extent, it is not effective for a terminal in the center of the cell due to the fact that the initially accessed terminal is mainly shunt to the edge of the cell. On the other hand, the SUL technology requires an additional carrier as a supplementary carrier, which may bring additional requirements during deployment.

To sum up, in the NR system, when a large number of users access the network at the same time, there will be a problem of congestion.

Based on this, in various embodiments of the present application, a network device sends indication information to a terminal, so as to achieve the purpose of shunting the terminal.

Herein, in practical application, the network device may be a base station, such as a next-generation Node B (gNB), etc.

The embodiments of the present application provide an information transmission method, which is applied to a network device and includes the following operations.

Indication information is sent to a terminal. The indication information indicates at least one of the following: at least one time and/or frequency domain resource, the at least one time and/or frequency domain resource being used for the terminal to determine the time and/or frequency domain resource for the terminal to receive information and/or send information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information, that is, whether the corresponding time and/or frequency domain resource supports a certain terminal processing capability; the priorities of the terminal types that are allowed to access the time and/or frequency domain resource corresponding to the indication information; and time and/or frequency domain resources that each terminal type in at least one terminal type is as a high priority.

Herein, in practical application, when the indication information indicates at least two pieces of information in the above information, the at least two pieces of information may be sent through one message, or the at least two pieces of information may be sent through different messages.

The time and/or frequency domain resource configured to receive the information and/or send the information refers to: the time and/or frequency domain resource configured for the terminal to receive the information and/or the time and/or frequency domain resource configured for the terminal to send the information.

In an embodiment, the time and/or frequency domain resource includes a BWP.

In an embodiment, if the indication information indicates at least one time and/or frequency domain resource, that is, in a case where the indication information indicates at least one time and/or frequency domain resource, the indication manner of the indication information includes at least one of the following: a bitmap corresponding to the time and/or frequency domain resource; an index of the time and/or frequency domain resource; and a RIV of the frequency domain resource.

Herein, in practical application, the time and/or frequency domain resource may be indicated using the resource allocation type, which may also be called resource allocation manner type, including the resource allocation type 0 (may be expressed as Type 0 in English) and the resource allocation type 1 (may be expressed as type 1 in English). Here, the specific manners of the resource allocation manner type 0 and the resource allocation manner type 1 may be understood with reference to the related art. The resource allocation manner type 0 is a manner of indicating the time and/or frequency domain resource through the bitmap. The resource allocation manner type 1 indicates the frequency domain resource through the RIV (corresponding to the starting position of a virtual Resource Block (RB) and the number of consecutively allocated RBs).

In an embodiment, if the indication information indicates the terminal types that are allowed to access the time and/or frequency domain resource corresponding to the indication information, that is, in a case where the indication information indicates the terminal types that are allowed to access the time and/or frequency domain resource corresponding to the indication information, the indication manner of the indication information includes one of the following: a bitmap of the terminal types, and indexes of the terminal types.

In an embodiment, if the indication information indicates at least one terminal processing capability supported by the time and/or frequency domain resource corresponding to the indication information, that is, in a case where the indication information indicates at least one terminal processing capability supported by the time and/or frequency domain resource corresponding to the indication information, the indication manner of the indication information includes one of the following: a bitmap of the terminal processing capability, and an index of the terminal processing capability.

In an embodiment, if the indication information indicates the priorities of the terminal types that are allowed to access the time and/or frequency domain resource corresponding to the indication information, that is, in a case where the indication information indicates the priorities of the terminal types that are allowed to access the time and/or frequency domain resource corresponding to the indication information, an implementation mode is that the indication information specifically indicates the priority of at least one terminal type (i.e., the priority of each terminal type) allowed to access the time and/or frequency domain resource corresponding to the indication information. Another implementation mode is that the indication information specifically indicates the terminal types having high priority that are allowed to access the time and/or frequency domain resource corresponding to the indication information.

In an embodiment, if the indication information indicates time and/or frequency domain resources that each terminal type in at least one terminal type is as a high priority, that is, in a case where the indication information indicates time and/or frequency domain resources that each terminal type in at least one terminal type is as a high priority, the indication manner of the indication information includes one of the following: a bitmap of the time and/or frequency domain resources; indexes of the time and/or frequency domain resources; and RIVs of the frequency domain resources.

Herein, the time and/or frequency domain resources that each terminal type is as the high-priority refers to: the time and/or frequency domain resources of high-priority services respectively corresponding to each terminal type.

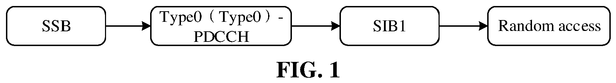

In practical application, in the NR system, as shown in FIG. 1, at the physical layer, the terminal accesses a carrier through the following process.

First, a SSB is obtained through cell search.

Then, CORESET#0, that is, an initial BWP, is obtained through a PBCH in the SSB. The terminal detects a type0-PDCCH search space in the CORESET#0 according to parameters of the type0-PDCCH configured in the PBCH, and obtains a control channel for scheduling the SIB1, so that a corresponding SIB1 message is obtained, and common configuration information of a cell is obtained.

Herein, the control channel for scheduling the SIB 1 is scrambled by a SI-RNTI, and carries scheduling related information for scheduling the SIB 1 PDSCH.

The common configuration information of the cell may include UL and DL common configuration information, Time Division Duplex (TDD) configuration), etc. Herein, the DL common configuration information may include frequency domain information and configuration information of initial DL BWP. The UL common configuration information may include frequency domain information of UL carrier and configuration information of initial UL BWP. Random access parameter information may be configured in the initial UL BWP for the terminal to initiate random access.

In order to shunt the terminal to other time and/or frequency domain resources instead of focusing on the initial BWP for the initial cell search, the shunt may be started from the SIB 1, or from random access, or from the reception of type0-PDCCH.

Based on this, in an embodiment, the indication information may be sent to the terminal through one of the following manners.

The indication information is sent to the terminal through a control channel subjected to CRC scrambling by a SI-RNTI.

The indication information is sent to the terminal through a system information.

The indication information is sent to the terminal through a SSB.

Herein, in practical application, considering that the number of bits corresponding to a carrier carrying the indication information is limited, the indication information indicates the time and/or frequency domain resource according to a certain granularity, and there may be two granularities for indication, and the granularity for indication is expressed by S.

The first is a bandwidth of the initial DL BWP indicated by the initial SSB, that is, the granularity of the indication information for time and/or frequency domain resource indication is the bandwidth corresponding to the initial BWP.

The second is a predefined bandwidth, such as 20MHz, 10MHz, etc. That is, the granularity of the indication information for time and/or frequency domain resource indication is the predefined bandwidth.

Herein, in practical application, any one of the above two granularities may be selected as needed.

The time and/or frequency domain resource corresponding to the indication information refers to: the time and/or frequency domain resource corresponding to the carrier carrying the indication information. For example, the control channel subjected to CRC scrambling by the SI-RNTI, the system information (such as the SIB1), and the SSB may each be carried on the initial BWP, and the initial BWP is the time and/or frequency domain resource corresponding to the indication information. At this time, the indication information indicates whether the initial BWP allows access by the terminal, or indicates the terminal types that are allowed to access by this initial BWP, or indicates the priorities of the terminal types that are allowed to access by this initial BWP, or indicates the BWP of the high-priority service that this initial BWP is as a specific type of the terminal.

The specific implementation process of sending the indication information to the terminal is described below.

First, the implementation process of sending the indication information to the terminal through the control channel subjected to CRC scrambling by the SI-RNTI is described in detail.

The operation that the indication information is sent to the terminal through the control channel subjected to CRC scrambling by the SI-RNTI may be understood as carrying the indication information in the control channel for scheduling system information (the control channel scrambled by the SI-RNTI), that is, the indication information is transmitted through a control channel scrambled by a RNTI corresponding to the system information.

Specifically, in an embodiment, the indication information is sent to the terminal through the control channel subjected to CRC scrambling by the SI-RNTI in a type0-PDCCH common search space.

Here, in practical application, the indication information may be sent to the terminal by being carried in the control channel for scheduling the SIB1, that is, by the control channel for scheduling the SIB1.

In practical application, in the PDCCH for scheduling the SIB1, there are 15 reserved bits, or even more reserved bits, such as 17 bits, which may be configured to indicate other cases of time and/or frequency domain resource.

On the other hand, considering that the number of bits is limited, the indication information indicates time and/or frequency domain resource according to a certain granularity, and there may be two granularities for indication, and the granularity for indication is expressed by S.

The first is a bandwidth of the initial DL BWP indicated by the initial SSB, that is, the granularity of the indication information for time and/or frequency domain resource indication is the bandwidth corresponding to the initial BWP.

The second is a predefined bandwidth, such as 20MHz, 10MHz, etc. That is, the granularity of the indication information for time and/or frequency domain resource indication is the predefined bandwidth.

Herein, in practical application, any one of the above two granularities may be selected as needed.

When the indication information indicates at least one time and/or frequency domain resource, the indication manner of the indication information includes at least one of the following manners.

Indication is performed through a bitmap corresponding to the time and/or frequency domain resource.

Indication is performed through an index of the time and/or frequency domain resource.

Indication is performed through a RIV of the frequency domain resource.

Herein, when indication is performed in the form of the bitmap, the time and/or frequency domain resource locations with S as the granularity are indicated respectively. Different bits indicate whether different time and/or frequency domain resource locations are available.

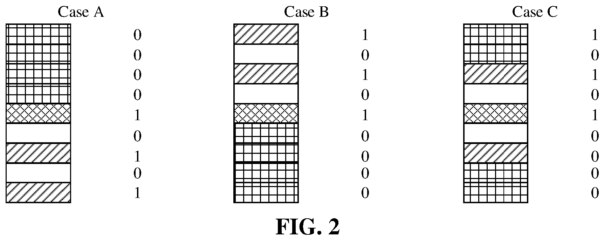

Exemplarily, taking the BWP as an example, considering that the maximum system bandwidth supported by low frequency is 100MHz, and taking S=20MHz as an example, there are 5 non-overlapping BWPs in total. Considering that the current BWP may be the BWP with the lowest frequency, for a BWP with a higher frequency than the current BWP, 4 bits are needed to indicate the other 4 BWPs. The current BWP may also be the BWP having the highest frequency. For a BWP with a lower frequency than the current BWP, 4 bits are needed to indicate the other 4 BWPs. In addition, it may also indicate whether the current BWP may be used by a low-cost terminal, a total of 9 bits of bitmap may be needed for indications, the middle bit of 9 bits corresponds to the current bit, and the terminal may determine the locations of other BWPs. and whether the corresponding BWP may be used. FIG. 2 illustrates three indication cases, corresponding to a case A, a case B, and a case C, respectively. Herein, in the case A, the current BWP is located in the BWP with the highest frequency and with S as the granularity divided by the system bandwidth. In the case B, the current BWP is located in the BWP with the lowest frequency and with S as the granularity divided by the system bandwidth. In the case C, the current BWP is located at the BWP with the middle frequency and with S as the granularity divided by the system bandwidth. Of course, the terminal does not know the location of the current BWP, and only needs to use the middle bit as a reference and an indication of the current BWP to identify whether there is a BWP available on a higher frequency or a lower frequency than the current BWP. In FIG. 2, indicates out of system bandwidth, ▨ indicates available, and ☐ indicates unavailable.

Here, if the NR light terminal only needs to consider whether the BWP other than the current BWP is available without considering the current BWP, only 8 bits are needed to implement the bitmap indication.

When indication is performed through a manner of index or a manner of index and bitmap, taking the BWP as an example, and considering that the current BWP has 5 possible locations in the entire system bandwidth, 3 bits are needed to complete the location indication. For example, 000 indicates the first location, and 001 indicates the second position, that is, the location index is indicated. In addition, which BWPs may be used may also be indicated, 5 BWPs need to be arranged and combined (

$$C_5^1 + C_5^2 + C_5^3 + C_5^4 + C_5^5 = 31$$ ; herein, $C_Y^X$ indicates possible methods of taking X from Y elements, and there is another combination if all are considered unavailable, so that there are 32 cases in total), or it is equivalent to directly indicate with a 5bit bitmap, together with 5 possible 3-bit indications in the system bandwidth, a total of 8 bits are needed.

If the current BWP may not be used by the NR light terminal, only 4 bits are needed to indicate which BWPs may be used, together with 3 bits for 5 possible locations, a total of 7 bits are needed. There is 1 bit less than a manner of fully using the bitmap.

When indication is performed through the RIV, the reserved bits (in an order from high to low or from low to high) in the PDCCH carry the RIV to indicate the frequency domain resources of the high-priority service respectively corresponding to each terminal type.

When the indication information indicates the terminal types that are allowed to access the time and/or frequency domain resource corresponding to the indication information, the terminals types that are allowed to access may also be indicated through scheduling the reserved bits in the PDCCH of the SIB1.

At this time, the indication manner of the indication information includes one of the following manners.

Indication is performed through a bitmap of the terminal types.

Indication is performed through indexes of the terminal types.

Herein, when indication is performed in the form of the bitmap, different bits indicate whether the terminals of different terminal types are allowed to access.

Exemplarily, assuming that the NR light terminal is classified into two types, together with an eMBB/URLLC terminal, there are three types. At this time, indication of the bitmap may be implemented using 3 bits, which are configured to indicate whether the terminals of the first type, the second type and the third type are supported. For example, 011 indicates that the terminals of the second and third types are allowed to access, and 100 indicates that only the terminal of the first type is allowed to access.

When indication is performed through the indexes of the terminal types, a corresponding index may be set for each terminal type, and the reserved bits in the PDCCH carry the indexes of the terminal types that are allowed to access.

When the indication information indicates at least one terminal processing capability supported by the time and/or frequency domain resource corresponding to the indication information, the supported terminal processing capability may also be indicated by scheduling the reserved bits in the PDCCH of the SIB1.

At this time, the indication manner of the indication information includes one of the following manners.

Indication is performed through a bitmap of the terminal processing capability.

Indication is performed through an index of the terminal processing capability.

Herein, when indication is performed in the form of the bitmap, different bits indicate whether different terminal processing capabilities are supported.

Exemplarily, assuming that the R15 and R16 terminals support the two terminal processing capabilities, if the lower terminal processing capability 3 is introduced for the NR light terminal, the above indication information may also indicate whether the terminal processing capability 3 is supported. At this time, indication of the bitmap may be implemented using 3 bits, which are configured to indicate whether the first terminal processing capability, the second terminal processing capability and the third terminal processing capability are supported respectively. For example, 011 indicates that the second and third terminal processing capabilities are supported, and 100 indicates that only the first terminal processing capability is supported.

When indication is performed through the index of the terminal processing capability, a corresponding index may be set for each terminal type, and the reserved bits in the PDCCH carry the index of the supported terminal processing capability.

When the indication information indicates the priorities of the terminal types that are allowed to access the time and/or frequency domain resource corresponding to the indication information, the priorities of the terminal types that are allowed to access may also be indicated by scheduling the reserved bits in the PDCCH of the SIB1. It is to be noted that the reserved bits of the PDCCH are reserved bits in the R15/16 version. When these bits are given new meanings, they are no longer reserved bits.

In practical application, a priority value is defined for each terminal type, ranging from 0 to P, where 0 indicates the lowest priority and P indicates the highest priority. Exemplarily, assuming that the NR light (that is, RedCap) terminal is classified into two types, together with an ordinary terminal (that is, the eMBB/URLLC terminal), there are three types in total, which are assumed as A, B, and C, and may be set as needed. The priority value of B is 2, the priority value of A is 1, and the priority value of C is 0. When the terminal whose terminal type is A or C receives the indication information, it knows that the terminal type of itself for the current BWP is not preferentially served, the terminal may select to continue to serve on the BWP, or select to search the BWP corresponding to the high priority again.

Of course, in practical application, the two terminal types have the same priority, which indicates that they may be equally served on the current time and/or frequency domain resource. The embodiments of the present application do not limit the process of how to set the priority value.

When the indication information indicates the time domain and /or frequency domain resources that each terminal type in the at least one terminal type is as the high priority (that is, the time and/or frequency domain resource location most suitable for a certain terminal type), the time domain and /or frequency domain resources that each terminal type in the at least one terminal type is as the high priority (such as the BWP resource) may also be indicated by scheduling the reserved bits in the PDCCH of the SIB1.

At this time, the indication manner of the indication information includes one of the following manners.

Indication is performed through a bitmap of the time and/or frequency domain resources.

Indication is performed through an index of the time and/or frequency domain resources.

Indication is performed through RIVs of the frequency domain resources.

Herein, when indication is performed in the form of the bitmap, each terminal type corresponds to one bitmap of time and/or frequency domain resources, and different bits indicate whether different time and/or frequency domain resources are time and/or frequency domain resources of the high-priority service corresponding to the terminal type. Exemplarily, the above example indicates that the current BWP is the high-priority BWP of the terminal type B, and other terminal types do not have the highest priority in this BWP, that is, other terminal types are of low priority. At this time, the terminals of the terminal types C and A may know the BWP of its highest-priority service based on indication in the form of the bitmap.

When indication is performed through the indexes of the time and/or frequency domain resources, a corresponding index may be set for each time and/or frequency domain resource, and the reserved bits in the PDCCH (in an order from high to low or from low to high) carry the index of the time and/or frequency domain resource of the high-priority service corresponding to each terminal type.

When indication is performed through the RIV, the reserved bits (in an order from high to low or from low to high) in the PDCCH carry the RIV to indicate the frequency domain resource of the high-priority service corresponding to each terminal type.

Here, it is to be noted that: in practical application, when the network device sends multiple SSBs for terminal access, at this time, the bandwidth of CORESET#0 corresponding to some SSBs (CORESET resources configured to transmit the type0-PDCCH) is relatively small. When the NR eMBB terminal and/or URLLC terminal is not allowed to access, whether the corresponding CORESET#0 resource and its subsequent broadcast messages are suitable for a certain type of the terminal or whether a certain type of terminal is allowed to access may be indicated in the indication information in the type0-PDCCH.

Then, a specific implementation process of sending the indication information to the terminal through the system information is described.

The operation that the indication information is sent to the terminal through the system information may be understood as carrying the indication information through the system information (which may also be called system information).

In practical application, the system information may be the SIB1 or other SIBs.

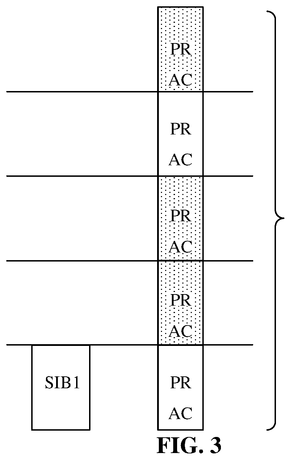

FIG. 3 is a schematic diagram of indicating a BWP that may be used by a low-cost terminal (such as a NR light terminal) using a SIB1. In this case, the SIB1 message is received on the current BWP. According to the available BWP indicated by the SIB, the low-cost terminal initiates a random access procedure on the indicated BWP, that is, the random access of the terminal is allocated to different BWPs, which plays the role of shunting. The random access procedure includes the transmission of a Message1, a Message2, a Message3 and a Message4. The Message1 and Message3 are in UL transmission, and the terminal sends information. The Message2 and Message4 are in DL transmission, and the terminal receives information. Multiple UL and DL BWP pairs are configured in the SIB, that is, pairs of UL BWP and DL BWP are configured in the SIB1, which may be a paired spectrum of FDD, or a pair of BWPs with a common center frequency of TDD, and the terminal may perform random access UL and DL transmission on the determined BWP pairs of resources.

Since the transmission of the system information is carried on the PDSCH, the requirement for bit overhead is not high. Therefore, similar to a manner of carrying the indication information by the control channel, the indication manner of the indication information may be implemented through the bitmap and the index. The specific operations are as follows.

When the indication information indicates at least one time and/or frequency domain resource, the indication manner of the indication information includes at least one of the following manners.

Indication is performed through the bitmap corresponding to the time and/or frequency domain resource.

Indication is performed through the index of the time and/or frequency domain resource.

Indication is performed through the RIV of the frequency domain resource.

Exemplarily, taking the BWP as an example, considering that the maximum system bandwidth supported by a low frequency is 100MHz, and taking S=20MHz as an example, there are 5 non-overlapping BWPs in total. Considering that the current BWP may be the BWP with the lowest frequency, for a BWP with a higher frequency than the current BWP, 4 bits are needed to indicate the other 4 BWPs, and the current BWP may also be the BWP with the highest frequency. For a BWP with a lower frequency than the current BWP, 4 bits are needed to indicate the other 4 BWPs. In addition, the current BWP may also be indicated whether it may be used by a low-cost terminal, a total of 9 bits of bitmap indication may be needed, the middle bit of the 9 bits correspond to the current bit, and the terminal may determine the locations of other BWPs and whether the corresponding BWP may be used. FIG. 2 illustrates three indication cases, corresponding to a case A, a case B, and a case C, respectively. Herein, in the case A, the current BWP is located in the BWP with the highest frequency and with S as the granularity divided by the system bandwidth. In the case B, the current BWP is located in the BWP with the lowest frequency and with S as the granularity divided by the system bandwidth. In the case C, the current BWP is located at the BWP with the middle frequency and with S as the granularity divided by the system bandwidth. Of course, the terminal does not know the location of the current BWP, and only needs to use the middle bit as a reference as an indication of the current BWP to identify whether there is a BWP available on a higher frequency or a lower frequency than the current BWP.

Here, if the NR light terminal only needs to consider whether the BWP other than the current BWP is available without considering the current BWP, only 8 bits are needed to implement the bitmap indication.

When indication is performed through the index or by the index and the bitmap, taking the BWP as an example, and considering that the current BWP has 5 possible locations in the entire system bandwidth, 3 bits are needed to complete the location indication, for example, 000 indicates the first location, and 001 indicates the second position, that is, the location index is indicated. In addition, which BWPs may be used may also be indicated, 5 BWPs need to be arranged and combined (

$$C_5^1 + C_5^2 + C_5^3 + C_5^4 + C_5^5 = 31$$ ; herein, $C_Y^X$ indicates possible methods of taking X from Y elements, if all are considered unavailable, there is another combination, so that there are 32 cases in total), or it is equivalent to directly indicate with a 5bit bitmap, together with 5 possible 3-bit indications in the system bandwidth, a total of 8 bits are needed.

If the current BWP may not be used by the NR light terminal, only 4 bits are needed to indicate which BWPs may be used, together with 3 bits on 5 possible locations, a total of 7 bits are needed. There is 1 bit less than a manner of fully using the bitmap.

When indication is performed through the RIV, the frequency domain resource of the high-priority service corresponding to each terminal type is carried in the system information (in an order from high to low or from low to high) through the RIV.

When the indication information indicates the terminal types that are allowed to access the time and/or frequency domain resource corresponding to the indication information, the terminal types that are allowed to access may also be indicated through the system information.

At this time, the indication manner of the indication information includes one of the following manners.

Indication is performed through a bitmap of the terminal types.

Indication is performed through indexes of the terminal types.

Herein, when indication is performed in the form of the bitmap, different bits indicate whether the terminals of different terminal types are allowed to access.

Exemplarily, assuming that the NR light terminal is classified into two types, together with an eMBB/URLLC terminal, there are three types. At this time, indication of the bitmap may be implemented using 3 bits, which are configured to indicate whether the terminals of the first type, the second type and the third type are supported. For example, 011 indicates that the terminals of the second and third types are allowed to access, and 100 indicates that only the terminals of the first type are allowed to access.

When indication is performed through the indexes of the terminal types, a corresponding index may be set for each terminal type, and the indexes of the terminal types that are allowed to access are carried in the system information.

When the indication information indicates at least one terminal processing capability supported by the time and/or frequency domain resource corresponding to the indication information, the supported terminal processing capability may also be indicated through the system information.

At this time, the indication manner of the indication information includes one of the following manners.

Indication is performed through a bitmap of the terminal processing capability.

Indication is performed through an index of the terminal processing capability.

Herein, when indication is performed in the form of the bitmap, different bits indicate whether different terminal processing capabilities are supported.

Exemplarily, assuming that the R15 and R16 terminals support the two terminal processing capabilities, if the lower terminal processing capability 3 is introduced for the NR light terminal, the above indication information may also indicate whether the terminal processing capability 3 is supported. At this time, indication of the bitmap may be implemented using 3 bits, which are configured to indicate whether the first terminal processing capability, the second terminal processing capability and the third terminal processing capability are supported respectively. For example, 011 indicates that the second and third terminal processing capabilities are supported, and 100 indicates that only the first terminal processing capability is supported.

When indication is performed through the index of the terminal processing capability, a corresponding index may be set for each terminal type, and the index of the terminal processing capability is carried in the system information.

When the indication information indicates the priorities of the terminal types that are allowed to access the time and/or frequency domain resource corresponding to the indication information, the priorities of the terminal types that are allowed to access may also be indicated through the system information.

In practical application, a priority value is defined for each terminal type, ranging from 0 to P, where 0 indicates the lowest priority and P indicates the highest priority. Exemplarily, assuming that the NR light terminal is classified into two types, together with the ordinary terminal (i.e., the eMBB/URLLC terminal), there are three types, which are assumed as A, B, and C. It may be set as needed that the priority value of B is 2, the priority value of A is 1, and the priority value of C is 0. When the terminal whose type is A or C receives the indication information, it knows that the terminal type of itself is not preferentially served in the current BWP, the terminal may select to continue to serve on the BWP, or select to search the BWP corresponding to the high priority again.

Of course, in practical application, the two terminal types have the same priority, which indicates that they may be equally served on the current time and/or frequency domain resource. The embodiment of the present application does not limit the process of how to set the priority value.

When the indication information indicates the time domain and /or frequency domain resources that each terminal type in the at least one terminal type is as the high priority (that is, the time and/or frequency domain resource location most suitable for a certain type of the terminal), the time domain and /or frequency domain resources that each terminal type in the at least one terminal type is as the high priority (such as the BWP resource) may also be indicated through the system information.

At this time, the indication manner of the indication information includes one of the following manners.

Indication is performed through a bitmap of the time and/or frequency domain resources.

Indication is performed through the indexes of the time and/or frequency domain resources.

Indication is performed through the RIVs of the frequency domain resources.

Herein, when indication is performed in the form of the bitmap, each terminal type corresponds to one bitmap of time and/or frequency domain resource, and different bits indicate whether different time and/or frequency domain resources are time and/or frequency domain resources of the high-priority service corresponding to the terminal type. Exemplarily, the above example indicates that the current BWP is the BWP having the highest priority of the terminal type B, and other terminal types do not have the highest priority in this BWP, that is, other terminal types are of low priority. At this time, the terminals of the types C and A may know the BWP of its highest-priority service based on indication in the form of the bitmap.

When indication is performed through the indexes of the time and/or frequency domain resources, a corresponding index may be set for each time and/or frequency domain resource, and the index of the time and/or frequency domain resource of the highest-priority service corresponding to each terminal type is carried in the system information (in an order from high to low or from low to high).

When indication is performed through the RIVs, the RIVs are carried in the system information (in an order from high to low or from low to high) to indicate the frequency domain resource of the highest-priority service corresponding to each terminal type.

Here, as mentioned above, the terminal obtains the common configuration information of the cell by receiving the SIB1 message, which includes UL and DL common configuration information, TDD configuration, etc. Herein, the DL common configuration information includes frequency domain information and initial DL BWP configuration information. The UL common configuration information includes UL carrier frequency domain information and initial UL BWP configuration information. Random access parameter information may be configured in the initial UL BWP for the terminal to initiate random access. The terminal initiates random access at the initial UL BWP, and receives DL information related to the initial access at the corresponding initial DL BWP. Here, before the network configures other BWPs for the terminal, data transmission is performed on the initial DL BWP and the initial UL BWP.

Therefore, when the indication information at least indicates at least one time and/or frequency domain resource, indication may be performed in a more detailed manner, and there are the following two indication manners.

The first indication manner is that multiple sets of parameters of the time and/or frequency domain resources are configured in the SIB message. That is, the indication information includes N time and/or frequency domain resource locations carried in the SIB1 and parameter configuration information corresponding to each time and/or frequency domain resource.

In the related art, in the SIB1 message, a set of initial DL BWP configuration information may be configured in the DL common configuration information, and a set of initial UL BWP configuration information may be configured in the UL common configuration information. In the embodiments of the present application, parameter information related to multiple sets of DL BWPs (these DL BWPs are called initial DL BWPs) and UL BWPs (these UL BWPs are called initial UL BWPs) are respectively configured in the DL common configuration information and the UL common configuration information. Generic parameters, Random Access Channel (RACH) configuration information, common configuration information of an UL service channel (that is, a Physical Uplink Shared Channel (PUSCH)) and an UL common control channel (that is a Physical Uplink Control Channel (PUCCH)), etc., are configured for the UL BWP. Generic parameters, common configuration information of a DL control channel (that is, the PDCCH), and common configuration information of a DL service channel (that is, the PDSCH) are configured for the DL BWP. In addition, whether each BWP supports the NR light or low-cost terminal, or the terminal supporting a certain terminal capability or terminal processing capability may be configured respectively. In this way, the NR light terminal reads these information and finds the matched BWP according to its own capability for performing random access, data transmission and other operations.

For example, other BWPs that may perform random access and data transmission are obtained.

Here, the NR light terminal is only an example of the terminal capability, and may also be other terminal types, such as the terminal with reduced terminal capability, compared with the eMBB/URLLC terminal, fewer antennas are used and smaller bandwidth is supported.

In this way, each BWP in multiple sets of BWPs may be provided with specific parameter configuration of the BWP, and individualized configuration of different BWPs is allowed. For example, random access configuration, search space configuration, etc. may be different.

The second indication manner is that a set of common time and/or frequency domain resource parameters is configured in the SIB1 message.

Exemplarily, the configuration for the initial DLBWP and the initial UL BWP in the SIB1 in the related art is still used, but the locations of different BWPs may be configured. Except for the different time and/or frequency domain resource locations, other terminal access parameter configuration and DL detection related configuration of these BWPs may be the same.

That is, the indication information includes N time and/or frequency domain resource locations carried in the SIB1 and generic parameter configuration information. The generic parameter configuration information is suitable for the time and/or frequency domain resources determined by the N time and/or frequency domain resource locations.

The second indication manner may save signaling overhead.

Herein, N is an integer greater than or equal to 1.

In practical application, any one of the above indication manners may be selected as needed.

In practical applications, the SIB message not only indicates which time and/or frequency domain resources may be configured to transmit the NR light terminal, but also indicates the terminal capability of the NR light terminal supported by these time and/or frequency domain resources. When the NR light terminal is further classified by multiple capabilities, in this way, the terminal may find the matched time and/or frequency domain resource for random access, data transmission, etc. according to its own capability.

When the indication manner of the indication information is implemented through the bitmap and the index, a corresponding bit (such as 1 bit) may be added to indicate whether the terminal capability 1 or terminal capability 2 of the NR light are supported.

When the indication manner of the indication information is implemented by configuring parameters in the SIB message, the supported terminal capability may be configured for each time and/or frequency domain resource.

By using a framework of time and/or frequency domain resource, specific parameter configuration of the time and/or frequency domain resource may be performed for the terminals with different capabilities, which may better support the corresponding types of terminals (such as Multiple Input Multiple Output (MIMO) layer, processing time, etc.)

Here, in practical application, when the network device sends multiple SSBs for terminal access, at this time, the bandwidth of CORESET#0 corresponding to some SSBs (CORESET resources configured to transmit the type0-PDCCH) is relatively small. When the NR eMBB terminal and/or URLLC terminal is not allowed to access, whether the corresponding CORESET#0 resource and its subsequent broadcast messages are suitable for a certain type of the terminal or whether a certain type of terminal is allowed to access may be indicated in the indication information in the SIB1.

Finally, the specific implementation process of sending the indication information to the terminal through the SSB is described.

The operation that the indication information is sent to the terminal through the SSB may be understood as carrying the indication information through the SSB.

Specifically, indication is performed through bits in the PBCH of the SSB.

When the number of the biggest SSBs is less than or equal to 8, 2 bits are reserved in the PBCH. When the number of the biggest SSBs is 64, these 2 bits together with another bit indicate the high 3 bits of the index of the SSB. That is, in FR1, i.e., the frequency band below 6GHz, 2 bits are still not used. At the same time, in the information of a Master Information Block (MIB), 1 bit in the PBCH is still not used. Therefore, 3 reserved bits in the PBCH may be used.

Therefore, other time and/or frequency domain resources may be indicated through the two reserved bits for NR light terminal access. The 2 bits may indicate 4 states, for example, respectively indicate CORESET#0 determined by a pdcch-ConfigSIB 1 field in the current PBCH, that is, at most 4 time domains and/or frequency domain resources with the bandwidth of the initial BWP (or the predefined bandwidth) as the granularity.

Based on this, in an embodiment, when the indication information is sent to the terminal through the SSB, the indication information is carried through the reserved bits in the PBCH.

When the indication information indicates at least one time and/or frequency domain resource, the indication manner of the indication information includes at least one of the following manners.

Indication is performed through the bitmap corresponding to the time and/or frequency domain resource.

Indication is performed through the index of the time and/or frequency domain resource.

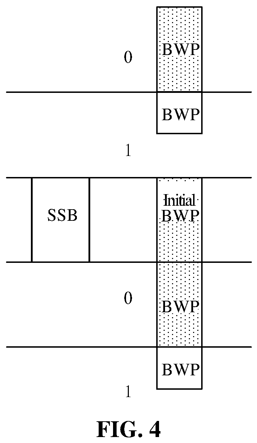

Exemplarily, taking the BWP as an example, CORESET#0 corresponding to the current SSB is the bandwidth of 20MHz, and the indicated granularity is the bandwidth of 20MHz, but in a case where the bandwidth of the NR light terminal is 10MHz, since the bandwidth of CORESET#0 is larger than that of the NR light terminal, the NR light terminal may not be accessed, the BWP does not need to be included during indication. Indication is performed through the 2-bit bitmap, 2 BWPs including a BWP with a higher frequency than CORESET#0 and a BWP with a lower frequency than CORESET#0 may be indicated, as shown in FIG. 4. Of course, the bandwidth of the NR light terminal may also be the same as that of CORESET#0.

When indication is performed through the indexes of the terminal types, a corresponding index may be set for each type of the terminal, and the reserved bits in the PDCCH carry the indexes of the terminal types that are allowed to access.

When indication is performed through the indexes of the time and/or frequency domain resources, a corresponding index may be set for each time and/or frequency domain resource, and the index of the time and/or frequency domain resource of the highest-priority service corresponding to each type of the terminal is carried in the SSB (in an order from high to low or from low to high).

When the indication information indicates the terminal types that are allowed to access the time and/or frequency domain resource corresponding to the indication information, the terminal types that are allowed to access may also be indicated through the reserved 3 bits in the PBCH.

At this time, the indication manner of the indication information includes one of the following manners.

Indication is performed through the bitmap of the terminal types.

Indication is performed through the indexes of the terminal types.

Herein, when indication is performed in the form of the bitmap, different bits indicate whether the terminals of different terminal types are allowed to access.

Exemplarily, assuming that the NR light terminal is classified into two types, at this time, indication of the bitmap may be implemented using 2 bits, which are configured to indicate whether the terminals of the first type and the second type are supported respectively. For example, 11 indicates that the terminals of the first type and the second type are allowed to access, and 10 indicates that only the terminal of the first type is allowed to access.

When indication is performed through the indexes of the terminal types, a corresponding index may be set for each terminal type, and the reserved bits in the PDCCH carry the indexes of the terminal types that are allowed to access.

When the indication information indicates at least one terminal processing capability supported by the time and/or frequency domain resource corresponding to the indication information, the supported terminal processing capability may also be indicated through the reserved 3 bits in the PBCH.

At this time, the indication manner of the indication information includes one of the following manners.

Indication is performed through the bitmap of the terminal processing capability.

Indication is performed through the index of the terminal processing capability.

Herein, when indication is performed in the form of the bitmap, different bits indicate whether different terminal processing capabilities are supported.

When indication is performed through the indexes of the terminal processing capabilities, a corresponding index may be set for each terminal type, and the reserved bits in the PDCCH carry the index of the supported terminal processing capability.

When the indication information indicates the priorities of the terminal types that are allowed to access the time and/or frequency domain resource corresponding to the indication information, the priorities of the terminal types that are allowed to access may also be indicated through the reserved 3 bits in the PBCH.

In practical application, due to the limited bits, the priority of each type of the terminal may not be indicated, so that one terminal type may be indicated. For example, in a case where there are two terminal types, indication may be performed through 1 bit, and in a case where there are three terminal types, indication may be performed through 2 bits. Therefore, at most 4 terminal types may be indicated through at most 2 bits. The indicated terminal type indicates the terminal type currently served with high priority on the corresponding time and/or frequency domain resource. Then, the terminals of other types are types served with low priority. Exemplarily, assuming that the NR light (RedCap) terminal is classified into two types, together with the ordinary terminal (that is, the eMBB/URLLC terminal), there are three types in total. The three terminal types are assumed as A, B, and C. Through indication of 2 bits, 00 corresponds to the type A, 01 corresponds to the type B, and 10 corresponds to the type C. Assuming that the current indication is 01, after the terminal whose terminal type is A or C (such as the two types corresponding to the NR light terminal) receives the indication information, it knows that its terminal type o is not preferentially served in the current BWP, the terminal may select to continue to serve on the BWP, or select to search the BWP corresponding to the high priority again.

When the indication information indicates the time domain and /or frequency domain resources that each terminal type in the at least one terminal type is as the high priority (that is, the time and/or frequency domain resource location most suitable for a certain terminal type), the time domain and /or frequency domain resources that each terminal type in the at least one terminal type is as the high priority may also be indicated through the reserved 3 bits in the PBCH.

At this time, the indication manner of the indication information includes one of the following manners.

Indication is performed through the bitmap of the time and/or frequency domain resources.

Indication is performed through the indexes of the time and/or frequency domain resources.

Herein, exemplarily, taking the BWP as an example, CORESET#0 corresponding to the current SSB is the bandwidth of 20MHz, and the indicated granularity is the bandwidth of 20MHz, the current CORESET#0 is not needed to be indicated if it is not high priority service, so that the BWP does not need to be included during indication. Whether 2 BWPs including a time and/or frequency domain resource (such as the BWP) with a higher frequency than CORESET#0 and a time and/or frequency domain resource with a lower frequency than CORESET#0 are the time and/or frequency domain resources that the terminal type having the highest priority may be indicated through the 2-bit bitmap (when there are only 2 terminal types, only 1 bit is needed to indicate the terminal type served with high priority, and there are 2 bits left). Exemplarily, the above example indicates that the current time and/or frequency domain resource is the BWP having the highest priority of the terminal type B, and other terminal types do not have the highest priority in this BWP, that is, other terminal types are of low priority. At this time, the terminals of the types C and A may know the BWP of its highest-priority service based on indication in the form of the bitmap.

When indication is performed through the indexes of the time and/or frequency domain resources, a corresponding index may be set for each time and/or frequency domain resource, and the reserved bits in the PBCH carry the index of the time and/or frequency domain resource of the highest-priority service corresponding to each type of the terminal (in an order from high to low or from low to high). Here, since there are only 2 bits, the terminal types may only be classified into two types: the NR light terminal and the ordinary terminal.

It is to be noted that: in practical application, when the network device sends multiple SSBs for terminal access, at this time, the bandwidth of CORESET#0 corresponding to some SSBs (CORESET resources configured to transmit the type0-PDCCH) is relatively small. When the NR eMBB terminal and/or URLLC terminal is not allowed to access, whether the corresponding CORESET#0 resource and its subsequent broadcast messages are suitable for a certain type of the terminal or whether a certain type of terminal is allowed to access may be indicated in the indication information in the type0-PDCCH.

In an embodiment, the operation that the information is received and/or the information is sent may include at least one of the following operations.

The terminal receives system information.

The terminal performs information transmission during a random access procedure.

The terminal performs transmission of an UL or DL service channel.

Herein, in practical application, the random access procedure may be classified in a four-step process and a two-step process. Herein, the four-step process includes the transmission of a Message1, a Message2, a Message3 and a Message4. Herein, the Message1 and Message3 are in UL transmission, and are sent to the network side by the terminal. The Message2 and Message4 are in DL transmission, and the terminal receives the information. The terminal may transmit at least one message in the process on the determined time and/or frequency domain resource. The two-step process includes a Message A and a Message B. Herein, the Message A is in UL transmission, and is sent to the network side by the terminal. The Message B is in DL transmission, and the terminal receives the information. The terminal may transmit at least one message in the process on the determined time and/or frequency domain resource.

In practical application, there may be multiple time and/or frequency domain resources indicated by the network device, and the terminal may select one or more of the multiple indicated time and/or frequency domain resources, or the time and/or frequency domain resources corresponding to one or more of the multiple time and/or frequency domain resources, for example, an indicated DL time and/or frequency domain resource corresponds to a UL time and/or frequency domain resource, which is configured to send and/or receive the information by the terminal.

Herein, in practical application, the time and/or frequency domain resource indicated by the indication information may be a directly indicated UL time and/or frequency domain resource, or a directly indicated DL time and/or frequency domain resource. If the UL time and/or frequency domain resource is directly indicated, the terminal may initiate random access on the UL time and/or frequency domain resource. If the DL time and/or frequency domain resource is directly indicated, it may correspond to a corresponding UL time and/or frequency domain resource. For example, the DL BWP for TDD may correspond to a UL BWP with a same center frequency. For FDD, the BWP of each DL may also correspond to a UL BWP with different frequency. The terminal may perform random access on the time frequency UL resource corresponding to the indicated DL time and/or frequency domain resource. Downlink and UL transmission in the random access procedure are performed on the indicated DL time and/or frequency domain resource and UL time and/or frequency domain resource respectively.

Here, when the directly indicated time and/or frequency domain resource is the UL time and/or frequency domain resource, the corresponding DL time and/or frequency domain resource is usually indicated for terminal to receive the DL information such as random access response. The DL time and/or frequency domain resource may be indicated by the indication information or indicated by other information.

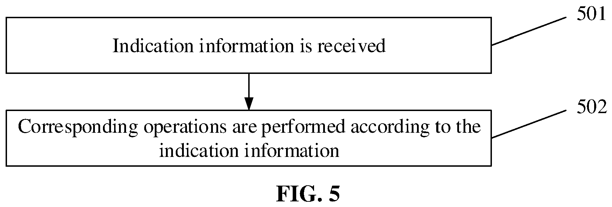

Correspondingly, the embodiments of the present application also provide an information transmission method, which is applied to a terminal. As shown in FIG. 5, the method includes the following operations.

At S501, indication information is received.

The indication information indicates at least one of the following: at least one time and/or frequency domain resource, the at least one time and/or frequency domain resource being used for the terminal to determine a time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority.

At S502, corresponding operations are performed according to the indication information.

Specifically, the terminal determines the time and/or frequency domain resource configured for the terminal to receive the information and/or send the information based on the at least one indicated time and/or frequency domain resource.

When the indication information indicates whether the time and/or frequency domain resource corresponding to the indication information allows access by the terminal, or indicates the terminal types that are allowed to access the time and/or frequency domain resource corresponding to the indication information, the terminal determines whether the time and/or frequency domain resource corresponding to the indication information can be used to access the network.

When the indication information indicates at least one terminal processing capability supported by the time and/or frequency domain resource corresponding to the indication information, the terminal determines whether the time and/or frequency domain resource corresponding to the indication information can be used to access the network.

When the indication information indicates the priorities of the terminal types that are allowed to access the time and/or frequency domain resource corresponding to the indication information, the terminal determines whether the priority of its own type is the highest priority of the terminal type of the time and/or frequency domain resource corresponding to the indication information, and then determines whether to access the network using the time and/or frequency domain resource corresponding to the indication information.

When the indication information indicates the time and/or frequency domain resources that each terminal type in the at least one terminal type is as the high priority, the terminal may determine whether the current time and/or frequency domain resource is the time and/or frequency domain resource of the highest priority service. If not, the terminal may further determine the time and/or frequency domain resource of the highest priority service corresponding to its own type, and then determine which time and/or frequency domain resource to access.

Herein, the operation that determining the time and/or frequency domain resource configured for its own to receive the information and/or send the information may be understood as determining its own time and/or frequency domain resource for operation.

In an embodiment, the terminal may receive the indication information through one of the following manners.

The indication information is received through a control channel subjected to CRC scrambling by a SI-RNTI.

The indication information is received through a system information.

The indication information is received through a SSB.

Here, in practical application, when the indication information is sent through the control channel subjected to CRC scrambling by the SI-RNTI, the terminal receives the indication information through the control channel subjected to CRC scrambling by the SI-RNTI. When the indication information is sent through the system information, the terminal receives the indication information through the system information. When the indication information is sent through the SSB, the terminal receives the indication information through the SSB.

In an embodiment, the operation that the information is received and/or the information is sent includes the following operations.

The system information is received.

Information transmission during a random access procedure is performed.

Transmission of an UL or DL service channel is performed.

In an embodiment, the operation that the indication information is received through the control channel subjected to CRC scrambling by the SI-RNTI includes the following operation.

The indication information is received through the control channel subjected to CRC scrambling by the SI-RNTI in a type 0-PDCCH common search space.

In an embodiment, the operation that the indication information is received through the system information includes the following operation.

The indication information is received through a SIB1.

In an embodiment, when the first indication information is received through the SSB, the first indication information is obtained through reserved bits in a PBCH.

It may be seen from the above description that through the solutions of the embodiments of the present application, for the terminal (such as the NR Light terminal), its own time and/or frequency domain resource for operation may be detected, or the time and/or frequency domain resource corresponding to its own processing capability may further be matched. When there are multiple time and/or frequency domain resources, the time and/or frequency domain resources to be used subsequently may be determined in a random manner or through a terminal identity. Through the determined time and/or frequency domain resources, the system information may be received, the random access procedure may be initiated, etc.

Based on this, in an embodiment, the indication information indicates that M time and/or frequency domain resources are available. The time and/or frequency domain resource configured for its own to receive the information and/or send the information (that is, the determined time and/or frequency domain resource for receiving the information and/or the determined time and/or frequency domain resource for sending the information) is determined from the M available time and/or frequency domain resources according to a selection strategy. M is a positive integer greater than 1.

Herein, in an embodiment, the operation that the time and/or frequency domain resource configured for its own to receive the information and/or send the information is determined from the M available time and/or frequency domain resources according to the selection strategy includes at least one of the following operations.

A random number is generated. The time and/or frequency domain resource corresponding to the generated random number in the M available time and/or frequency domain resources is determined as the time and/or frequency domain resource configured for the terminal to receive the information and/or send the information.

The time and/or frequency domain resource configured for the terminal to receive the information and/or send the information is determined from the M available time frequency domain resources based on the terminal identity.

Here, for example, when the used time and/or frequency domain resource is determined in a random manner, assuming that the NR light terminal finds M available BWPs by receiving the indication information, the random numbers from 1 to M are generated, and the BWP to be accessed is selected according to a random number result.

In an embodiment, the operation that the time and/or frequency domain resource configured for the terminal to receive the information and/or send the information is determined from the M available time frequency domain resources based on the terminal identity includes the following operations.

Modulo operation is performed on the terminal identity to obtain an operation result.

The time and/or frequency domain resource configured for the terminal to receive the information and/or send the information is determined from the M available time and/or frequency domain resources according to the operation result.

Herein, exemplarily, assuming that the terminal performs modulo operation using the identification thereof, the BWP used by the terminal is determined according to the result. For example, the identification of the NR light terminal performs modulo operation on M to obtain a modulo value. When the modulo value is 0, the first BWP is allocated to the terminal. When the modulo value is 1, the second BWP is allocated to the terminal. When the modulo value is 2, the third BWP is allocated to the terminal. The terminal identity may be an International Mobile Subscriber Identity (IMSI), an International Mobile Equipment Identity (IMEI), a Mobile Subscriber Number (MSISDN), a Subscription Permanent Identifier (SUPI), of course, may also be other parameters, as long as the identification may represent the terminal, which is not limited in the embodiment of the present application.

Different terminals are allocated to different time domain and /or frequency domain resources, and the terminals with different capabilities may further subdivide the BWP, so as to avoid all terminals performing initial access and data transmission on the initial BWP where the SSB is located.

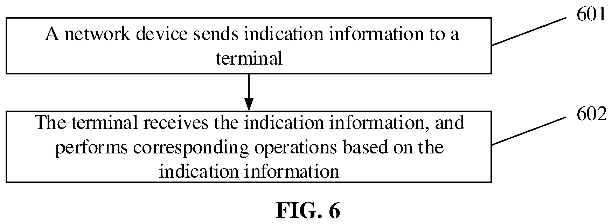

The embodiments of the present application also provide an information transmission method, as shown in FIG. 6, which includes the following operations.

At S601, a network device sends indication information to a terminal.

Here, the indication information indicates at least one of the following: at least one time and/or frequency domain resource, the at least one time and/or frequency domain resource being used for the terminal to determine time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority.

At S602, the terminal receives the indication information, and performs corresponding operations based on the indication information.

It is to be noted that the specific processing processes of the network device and the terminal have been described in detail above, which may not be repeated here.

In the information transmission method provided by the embodiments of the present application, the network device sends the indication information to the terminal. The indication information indicates at least one of the following: at least one time and/or frequency domain resource, the at least one time and/or frequency domain resource being used for the terminal to determine time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority. In the solutions provided by the embodiments of the present application, since the indication information is sent to the terminal, the terminal may select the time and/or frequency domain resource according to the indication information, and different terminals are shunt into different time and/or frequency domain resources, so that the terminal collision may be avoided, the network congestion may be avoided, and the user experience may be improved.

In addition, the indication information is sent to the terminal in one of the following manners that: the indication information is sent to the terminal through the control channel subjected to CRC scrambling by the SI-RNTI; the indication information is sent to the terminal through the system information; and the indication information is sent to the terminal through the SSB, so that shunt is performed from the initial access stage to avoid user collision and improve the success rate of user access.

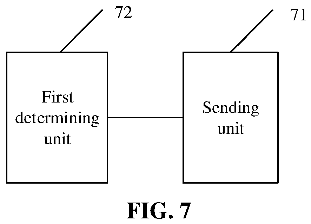

In order to implement the method in the embodiments of the present application, the embodiments of the present application further provide an information transmission apparatus, which is arranged on a network device, as shown in FIG. 7, and includes: a sending unit 71.

The sending unit 71 is configured to send indication information to a terminal. The indication information indicates at least one of the following: at least one time and/or frequency domain resource, the at least one time and/or frequency domain resource being used for the terminal to determine time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority.

Herein, in an embodiment, the sending unit 71 is configured to send the indication information to the terminal in one of the following manners.

The indication information is sent to the terminal through a control channel subjected to CRC scrambling by a SI-RNTI.

The indication information is sent to the terminal through a system information.

The indication information is sent to the terminal through a SSB.

In an embodiment, the sending unit 71 is configured to: send the indication information to the terminal through the control channel subjected to CRC scrambling by the SI-RNTI in a type 0-PDCCH common search space.

In an embodiment, the sending unit 71 is configured to send the indication information to the terminal through a SIB1.

In an embodiment, the sending unit 71 is configured to carry the indication information through reserved bits in a PBCH.

In an embodiment, as shown in FIG. 7, the apparatus may further include: a first determining unit 72, configured to determine the indication information.

In practical application, the sending unit 71 may be implemented by a communication interface in the information transmission apparatus. The first determining unit 72 may be implemented by a processor in the information transmission apparatus.

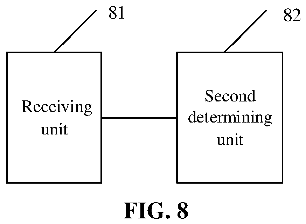

In order to implement the method on the terminal side in the embodiments of the present application, the embodiments of the present application further provide an information transmission apparatus, which is arranged on a terminal, as shown in FIG. 8, and includes: a receiving unit 81.

The receiving unit 81 is configured to receive indication information. The indication information indicates at least one of the following: at least one time and/or frequency domain resource, the at least one time and/or frequency domain resource being configured to enable the terminal to determine the time and/or frequency domain resource configured to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority.

Herein, in an embodiment, as shown in FIG. 8, the apparatus may further include: a second determining unit 82.

The second determining unit 82 is configured to perform corresponding operations according to the indication information.

Specifically, the second determining unit 82 determines the time and/or frequency domain resource configured to receive the information and/or send the information by the terminal based on the at least one indicated time and/or frequency domain resource.

When the indication information indicates whether the time and/or frequency domain resource corresponding to the indication information allows access by the terminal, or indicates the terminal types that are allowed to access the time and/or frequency domain resource corresponding to the indication information, the second determining unit 82 determines whether the time and/or frequency domain resource corresponding to the indication information can be used to access the network.

When the indication information indicates at least one terminal processing capability supported by the time and/or frequency domain resource corresponding to the indication information, the second determining unit 82 determines whether the time and/or frequency domain resource corresponding to the indication information can be used to access the network.

When the indication information indicates the priorities of the terminal types that are allowed to access the time and/or frequency domain resource corresponding to the indication information, the second determining unit 82 determines whether the priorities of the terminal types is the highest priority of the terminal type of the time and/or frequency domain resource corresponding to the indication information, and then determines whether the time and/or frequency domain resource corresponding to the indication information can be used to access the network.

When the indication information indicates time and/or frequency domain resources that each terminal type in at least one terminal type is as a high priority, the second determining unit 82 may determine whether the current time and/or frequency domain resource is the time and/or frequency domain resource of the highest priority service. If not, the terminal may further determine the time and/or frequency domain resource of the highest priority service corresponding to its own type, and then determine which time and/or frequency domain resource to access.

In an embodiment, the receiving unit 81 is configured to receive the indication information in one of the following manners.

The indication information is received through a control channel subjected to CRC scrambling by a SI-RNTI.

The indication information is received through a system information.

The indication information is received through a SSB.

Herein, in an embodiment, the apparatus may further include a transmission unit, configured to receive the information and/or send the information.

In an embodiment, the transmission unit is configured to perform at least one of the following operations.

The system information is received.

Information transmission during a random access procedure is performed.

Transmission of an UL or DL service channel is performed.

In an embodiment, the receiving unit 81 is configured to receive the indication information through the control channel subjected to CRC scrambling by the SI-RNTI in a type 0-PDCCH common search space.

In an embodiment, the receiving unit 81 is configured to receive the indication information through a SIB1.

In an embodiment, the receiving unit 81 is configured to obtain the first indication information through reserved bits in a PBCH.

In an embodiment, the indication information indicates that M time and/or frequency domain resources are available. The second determining unit 82 is configured to determine the time and/or frequency domain resource configured for the terminal to receive the information and/or send the information from the M available time and/or frequency domain resources according to a selection strategy. M is a positive integer greater than 1.

In an embodiment, the second determining unit 82 is configured to perform one of the following operations.

A random number is generated. The time and/or frequency domain resource corresponding to the generated random number in the M available time and/or frequency domain resources is determined as the time and/or frequency domain resource configured to receive the information and/or send the information by the terminal.

The time and/or frequency domain resource configured to receive the information and/or send the information by the terminal is determined from the M available time frequency domain resources based on the terminal identity.

In an embodiment, the second determining unit 82 is configured to perform modulo operation on the terminal identity to obtain an operation result, determine the time and/or frequency domain resource configured for the terminal to receive the information and/or send the information from the M available time and/or frequency domain resources according to the operation result.

In practical application, the receiving unit 81 and the transmission unit may be implemented by a communication interface in the information transmission apparatus. The second determining unit 82 may be implemented by a processor in the information transmission apparatus.

It is to be noted that the information transmission apparatus provided by the above embodiments is only exemplified by the division of the above program modules when performing information transmission. In practical application, the above processing and allocation may be completed by different program modules as needed, that is, the internal structure of the apparatus is divided into different program modules to complete all or part of the above-described processing. In addition, the embodiments of the information transmission apparatus and the information transmission method provided by the embodiments belong to the same concept, and the detailed implementation processes thereof are detailed in the method embodiments and are not repeated here.

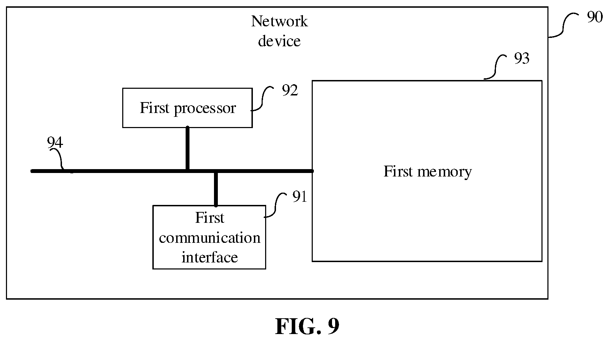

Based on the hardware implementation of the above program modules, and in order to implement the method on the network device side of the embodiments of the present disclosure, the embodiments of the present disclosure further provide a network device, as shown in FIG. 9, the network device 90 includes: a first communication interface 91 and a first processor 92.

The first communication interface 91 is capable of performing information interaction with a terminal.

The first processor 92 is connected with the first communication interface 91 to implement information exchange with the terminal, and is configured to execute the method provided by one or more technical solutions on the network device side when running a computer program. The computer program is stored on a first memory 93.

Specifically, the first communication interface 91 is configured to send indication information to the terminal. The indication information indicates at least one of the following: at least one time and/or frequency domain resource, the at least one time and/or frequency domain resource being used for the terminal to determine the time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority.

Herein, in an embodiment, the first communication interface 91 is configured to send the indication information to the terminal in one of the following manners.

The indication information is sent to the terminal through a control channel subjected to CRC scrambling by a SI-RNTI.

The indication information is sent to the terminal through a system information.

The indication information is sent to the terminal through a SSB.

In an embodiment, the first communication interface 91 is configured to send the indication information to the terminal through the control channel subjected to CRC scrambling by the SI-RNTI in a type 0-PDCCH common search space.

In an embodiment, the first communication interface 91 is configured to send the indication information to the terminal through a SIB1.

In an embodiment, the first communication interface 91 is configured to carry the indication information through reserved bits in a PBCH.

In an embodiment, the first processor 92 is configured to determine the indication information.

It is to be noted that: the specific processing processes of the first processor 92 and the first communication interface 91 are detailed in the method embodiments and are not repeated here.

Of course, in practical application, various components in the network device 90 are coupled together through a bus system 94. It is understandable that the bus system 94 is configured to implement connection communication between these components. In addition to the data bus, the bus system 94 also includes a power bus, a control bus and a status signal bus. However, for clarity of illustration, the various buses are marked as the bus system 94 in FIG. 9.

The first memory 93 in the embodiments of the present application is configured to store various types of data to support the operation of the network device 90. Examples of the data include: any computer program configured to operate on the network device 90.

The method disclosed in the above embodiments of the present application may be applied to the first processor 92 or implemented by the first processor 92. The first processor 92 may be an integrated circuit chip with signal processing capabilities. In an implementation process, each step of the method may be completed by an integrated logical circuit of hardware in the first processor 92 or an instruction in a software form. The first processor 92 described above may be a general-purpose processor, a Digital Signal Processor (DSP), or other programmable logic devices, discrete gates or transistor logic devices, discrete hardware components, etc. Various methods, steps, and logic block diagrams disclosed in the embodiments of the present disclosure may be implemented or executed by the first processor 92. The general-purpose processor may be a microprocessor or any conventional processor, etc. The steps of the methods disclosed in combination with the embodiment of the present application may be directly embodied as a hardware decoding processor for execution and completion, or a combination of hardware and software modules in the decoding processor for execution and completion. The software module may be located in a storage medium, which is located in the first memory 93, and the first processor 92 reads information in the first memory 93, and completes the steps of the foregoing method in combination with hardware.

In an exemplary embodiment, the network device 90 may be implemented by one or more Application Specific Integrated Circuits (ASICs), DSPs, Programmable Logic Devices (PLDs), Complex Programmable Logic Devices (CPLDs), FPGAs, general purpose processors, controllers, Micro Controller Units (MCUs), Microprocessors, or other electronic components, and is configured to execute the foregoing method.

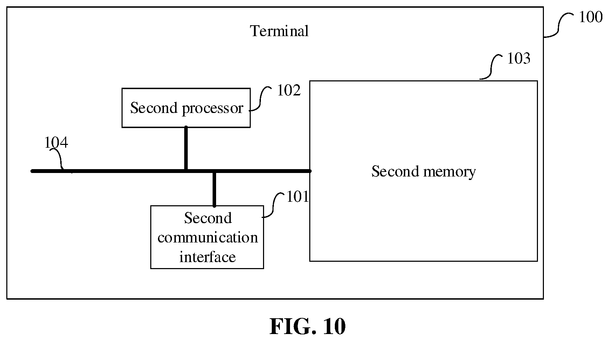

Based on the hardware implementation of the above program modules, and in order to implement the method on the terminal device side of the embodiments of the present disclosure, as shown in FIG. 10, the terminal 100 includes: a second communication interface 101 and a second processor 102.

The second communication interface 101 is capable of performing information interaction with the network device.

The second processor 102 is connected with the second communication interface 101 to implement information exchange with the network device, and is configured to execute the method provided by one or more technical solutions on the terminal side when running a computer program. The computer program is stored on a second memory 103.

Specifically, the second communication interface 101 is configured to receive the indication information. The indication information indicates at least one of the following: at least one time and/or frequency domain resource, the at least one time and/or frequency domain resource being used for the terminal to determine time and/or frequency domain resource for the terminal to receive the information and/or send the information; whether the time and/or frequency domain resource corresponding to the indication information allows access by the terminal; the terminal types that are allowed to access the time and/or frequency domain resource corresponding to the indication information; at least one terminal processing capability supported by the time and/or frequency domain resource corresponding to the indication information; the priorities of the terminal types that are allowed to access the time and/or frequency domain resource corresponding to the indication information; and time and/or frequency domain resources that each terminal type in at least one terminal type is as a high priority.

Herein, in an embodiment, the second processor 102 is configured to perform corresponding operations according to the indication information.

Specifically, the second processor 102 determines the time and/or frequency domain resource configured to receive the information and/or send the information by the terminal based on the at least one indicated time and/or frequency domain resource.

When the indication information indicates whether the time and/or frequency domain resource corresponding to the indication information allows access by the terminal, or indicates the terminal types that are allowed to access the time and/or frequency domain resource corresponding to the indication information, the second processor 102 determines whether the time and/or frequency domain resource corresponding to the indication information can be used to access the network.

When the indication information indicates at least one terminal processing capability supported by the time and/or frequency domain resource corresponding to the indication information, the second processor 102 determines whether the time and/or frequency domain resource corresponding to the indication information can be used to access the network.

When the indication information indicates the priorities of the terminal types that are allowed to access the time and/or frequency domain resource corresponding to the indication information, the second processor 102 determines whether the priority of its own type is the highest priority of the type of the terminal of the time and/or frequency domain resource corresponding to the indication information, and then determines whether the time and/or frequency domain resource corresponding to the indication information can be used to access the network.

When the indication information indicates time and/or frequency domain resources that each terminal type in at least one terminal type is as a high priority, the second processor 102 may determine whether the current time and/or frequency domain resource is the time and/or frequency domain resource of the highest priority service. If not, the terminal may further determine the time and/or frequency domain resource of the highest priority service corresponding to its own type, and then determine which time and/or frequency domain resource to access.

In an embodiment, the second communication interface 101 is configured to receive the indication information through one of the following manners.

The indication information is received through a control channel subjected to CRC scrambling by a SI-RNTI.

The indication information is received through a system information.

The indication information is received through a SSB.

Herein, in an embodiment, the second communication interface 101 is further configured to receive the information and/or send the information.

In an embodiment, the second communication interface 101 is configured to perform at least one of the following operations.

The system information is received.

Information transmission during a random access procedure is performed.

Transmission of an UL or DL service channel is performed.

In an embodiment, the second communication interface 101 is configured to receive the indication information through the control channel subjected to CRC scrambling by the SI-RNTI in a type 0-PDCCH common search space.

In an embodiment, the second communication interface 101 is configured to receive the indication information through a SIB1.

In an embodiment, the second communication interface 101 is configured to obtain the first indication information through reserved bits in a PBCH.

In an embodiment, the indication information indicates that M time and/or frequency domain resources are available. The second processor 102 is configured to: determine the time and/or frequency domain resource configured for the terminal to receive the information and/or send the information from the M available time and/or frequency domain resources according to a selection strategy. M is a positive integer greater than 1.

In an embodiment, the second processor 102 is configured to perform one of the following operations.

A random number is generated. The time and/or frequency domain resource corresponding to the generated random number in the M available time and/or frequency domain resources is determined as the time and/or frequency domain resource configured for the terminal to receive the information and/or send the information.

The time and/or frequency domain resource configured for the terminal to receive the information and/or send the information is determined from the M available time frequency domain resources based on the terminal identity.

In an embodiment, the second processor 102 is configured to perform modulo operation on the terminal identity to obtain an operation result, and determine the time and/or frequency domain resource configured for the terminal to receive the information and/or send the information from the M available time and/or frequency domain resources according to the operation result.

It is to be noted that: the specific processing processes of the second processor 102 and the second communication interface 101 are detailed in the method embodiments and are not repeated here.

Of course, in practical application, various components in the terminal 100 are coupled together through a bus system 104. It is understandable that the bus system 104 is configured to implement connection communication between these components. In addition to the data bus, the bus system 104 also includes a power bus, a control bus and a status signal bus. However, for clarity of illustration, the various buses are marked as the bus system 104 in FIG. 10.

The second memory 103 in the embodiments of the present application is configured to store various types of data to support the operation of the terminal 100. Examples of these data include: any computer program configured to operate on the terminal 100.

The method disclosed in the above embodiments of the present application may be applied to the second processor 102 or implemented by the second processor 102. The second processor 102 may be an integrated circuit chip with signal processing capabilities. In an implementation process, each step of the method may be completed by an integrated logical circuit of hardware in the second processor 102 or an instruction in a software form. The second processor 102 described above may be a general-purpose processor, a DSP, or other programmable logic devices, discrete gates or transistor logic devices, discrete hardware components, etc. Various methods, steps, and logic block diagrams disclosed in the embodiments of the present disclosure may be implemented or executed by the second processor 102. The general-purpose processor may be a microprocessor or any conventional processor, etc. The steps of the method disclosed in combination with the embodiment of the present application may be directly embodied as a hardware decoding processor for execution and completion, or a combination of hardware and software modules in the decoding processor for execution and completion. The software module may be located in a storage medium, which is located in the second memory 103, and the second processor 102 reads information in the second memory 103, and completes the steps of the foregoing method in combination with hardware.

In an exemplary embodiment, the terminal 100 may be implemented by one or more ASICs, DSPs, PLDs, CPLDs, FPGAs, general purpose processors, controllers, MCUs, Microprocessors, or other electronic components, and is configured to execute the foregoing method.

It is understandable that the memories (the first memory 93 and the second memory 103) in the embodiments of the present application may be volatile memories or nonvolatile memories, and may also include both volatile and nonvolatile memories. Herein, the non-volatile memory may be a Read Only Memory (ROM), a Programmable ROM (PROM), an Erasable PROM (EPROM), an Electrically EPROM (EEPROM), a Ferromagnetic Random Access Memory (FRAM), a Flash Memory, a magnetic surface memory, an optical disk, or a Compact Disc-ROM (CD-ROM). The magnetic surface memory may be a magnetic disk memory or a magnetic tape memory. The volatile memory may be a Random Access Memory (RAM), which is used as an external cache. By way of example, but not limitation, many forms of RAM are available, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The memories described in the embodiments of the present application are intended to include, but not be limited to, these and any other suitable types of memories.

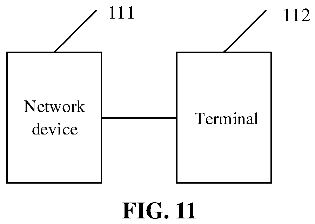

In order to implement the method of the embodiment of the present application, the embodiments of the present application further provide an information transmission system. As shown in FIG. 11, the system includes: a network device 111 and a terminal 112.

It is to be noted that the specific processing processes of the network device 111 and the terminal 112 have been described in detail above, and may not be repeated here.

In the exemplary embodiment, the embodiments of the present disclosure also provide a storage medium, that is, a computer storage medium, specifically a computer-readable storage medium, such as a first memory 93 including a stored computer program, which may be executed by the first processor 92 of the network device 90 to complete the steps of the foregoing method on the network device side. For another example, it may be a second memory 103 including the stored computer program, which may be executed by the second processor 102 of the terminal 100 to complete the steps of the foregoing method on the terminal side. The computer-readable storage medium may be the memory such as the FRAM, the ROM, the PROM, the EPROM, the EEPROM, the Flash Memory, the magnetic surface memory, the optical disk, or CD-ROM.

It is to be noted that the terms "first", "second" and the like are used to distinguish similar objects, and are not necessarily used to describe a specific order or sequence.

## Claims

1. An information transmission method, applied to a base station and comprising:
sending (601) indication information to a terminal, the indication information indicating:

at least one time and/or frequency domain resource, wherein the at least one time and/or frequency domain resource is used for the terminal to determine a time and/or frequency domain resource for the terminal to receive information and/or send information;
**characterized in that** the sending the indication information to the terminal comprises:

sending the indication information to the terminal through a System Information Block 1, SIB1,
wherein the at least one time and/or frequency domain resource comprises N initial uplink, UL, BWPs and N initial downlink, DL, BWPs;
wherein the indication information further indicates configuration information related to N initial uplink BWPs, and, configuration information related to N initial downlink BWPs,
wherein the configuration information related to N initial uplink BWPs comprises generic parameters, Random Access Channel, RACH, configuration information, common configuration information of Physical Uplink Shared Channel, PUSCH, and common configuration information of Physical Uplink Control Channel, PUCCH,
wherein the configuration information related to N initial downlink BWPs comprises generic parameters, common configuration information of Physical Downlink Control Channel, PDCCH, and common configuration information of Physical Downlink Shared Channel, PDSCH,
wherein N is an integer greater than 1,
wherein the indication information indicates BWP for RedCap terminal.

2. The method of claim 1, wherein the RedCap terminal uses fewer antennas than enhanced Mobile Broadband, eMBB, terminal/Ultra-Reliable Low-Latency Communications, URLLC, terminal.

3. The method of claim 1, wherein the RedCap terminal supports smaller bandwidth than enhanced Mobile Broadband, eMBB, terminal/Ultra-Reliable Low-Latency Communications, URLLC, terminal.

4. An information receiving method, applied to a terminal and comprising:
receiving indication information (501), the indication information indicating:

> at least one time and/or frequency domain resource, wherein the at least one time and/or frequency domain resource is used for the terminal to determine a time and/or frequency domain resource for the terminal to receive information and/or send information;
> **characterized in that** the receiving the indication information comprises:
>
>> receiving the indication information through a System Information Block 1, SIB1, wherein the at least one time and/or frequency domain resource comprises N initial uplink, UL, BWPs and N initial downlink, DL, BWPs;
>> wherein the indication information further indicates configuration information related to N initial uplink BWPs, and, configuration information related to N initial downlink BWPs,
>> wherein the configuration information related to N initial uplink BWPs comprises generic parameters, Random Access Channel, RACH, configuration information, common configuration information of Physical Uplink Shared Channel, PUSCH, and common configuration information of Physical Uplink Control Channel, PUCCH,
>> wherein the configuration information related to N initial downlink BWPs comprises generic parameters, common configuration information of Physical Downlink Control Channel, PDCCH, and common configuration information of Physical Downlink Shared Channel, PDSCH,
>> wherein N is an integer greater than to 1, wherein the indication information indicates BWP for RedCap terminal.

5. The method of claim 4, wherein the RedCap terminal uses fewer antennas than enhanced Mobile Broadband, eMBB, terminal/Ultra-Reliable Low-Latency Communications, URLLC, terminal.

6. The method of claim 4, wherein the RedCap terminal supports smaller bandwidth than enhanced Mobile Broadband, eMBB, terminal/Ultra-Reliable Low-Latency Communications, URLLC, terminal.

7. A base station, comprising: a first processor (92) and a first memory (93) configured to store a computer program runnable on the processor, wherein the first processor (92) is configured to execute the steps of any method of any one of claims 1-3 when running the computer program.

8. A terminal, comprising: a second processor (102) and a second memory (103) configured to store a computer program runnable on the processor, wherein the second processor (102) is configured to execute the steps of any method of any one of claims 4-6 when running the computer program.

9. A computer-readable medium on which a computer program is stored, the computer program, when executed by a processor of a base station implementing the steps of any method of claims 1-3, or when executed by a processor of a terminal implementing the steps of any method of claims 4-6.

## Patentansprüche

1. Verfahren für die Informationsübertragung, das auf eine Basisstation angewendet wird und umfasst:
Senden (601) von Anzeigeinformationen an ein Endgerät, wobei die Anzeigeinformationen anzeigen:

> wenigstens eine Zeit- und/oder Frequenzbereichsressource, wobei die wenigstens eine Zeit- und/oder Frequenzbereichsressource für das Endgerät verwendet wird, um eine Zeit- und/oder Frequenzbereichsressource für das das Endgerät zum Empfangen von Informationen und/oder zum Senden von Informationen zu bestimmen;
> **dadurch gekennzeichnet, dass** das Senden der Anzeigeinformationen an das Endgerät umfasst:
>
>> Senden der Anzeigeinformationen an das Endgerät über einen Systeminformationsblock 1, SIB1,
>> wobei die wenigstens eine Zeit- und/oder Frequenzbereichsressource N anfängliche Uplink-, UL-, BWPs und N anfängliche Downlink-, DL-, BWPs umfasst;
>> wobei die Anzeigeinformationen ferner Konfigurationsinformationen, die sich auf N anfängliche Uplink-BWPs beziehen, und Konfigurationsinformationen anzeigen, die sich auf N anfängliche Downlink-BWPs beziehen,
>> wobei die Konfigurationsinformationen, die sich auf N anfängliche Uplink-BWPs beziehen, generische Parameter, Random-Access-Channel-, RACH-, Konfigurationsinformationen, gemeinsame Konfigurationsinformationen des Physical-Uplink-Shared-Channel, PUSCH, und gemeinsame Konfigurationsinformationen des Physical-Uplink-Control-Channel, PUCCH, umfassen,

wobei die Konfigurationsinformationen, die sich auf N anfängliche Downlink-BWPs beziehen, generische Parameter, gemeinsame Konfigurationsinformationen des Physical-Downlink-Control-Channel, PDCCH, und gemeinsame Konfigurationsinformationen des Physical-Downlink-Shared-Channel, PDSCH, umfassen,

wobei N eine ganze Zahl größer als 1 ist, wobei die Anzeigeinformationen den BWP für das RedCap-Endgerät angeben.

2. Verfahren nach Anspruch 1, wobei das RedCap-Endgerät weniger Antennen verwendet als ein Enhanced-Mobile-Broadband-, eMBB-, Endgerät/Ultra-Reliable-Low-Latency-Communications-, URLLC-, Endgerät.

3. Verfahren nach Anspruch 1, wobei das RedCap-Endgerät eine geringere Bandbreite unterstützt als ein Enhanced-Mobile-Broadband-, eMBB-, Endgerät/Ultra-Reliable-Low-Latency-Communications-, URLLC-, Endgerät.

4. Verfahren zum Empfangen von Informationen, das auf ein Endgerät angewendet wird und umfasst:

Empfangen von Anzeigeinformationen (501), wobei die Anzeigeinformationen anzeigen wenigstens eine Zeit- und/oder Frequenzbereichsressource, wobei die wenigstens eine Zeit- und/oder Frequenzbereichsressource für das Endgerät verwendet wird, um eine Zeit- und/oder Frequenzbereichsressource für das das Endgerät zum Empfangen von Informationen und/oder zum Senden von Informationen zu bestimmen;

**dadurch gekennzeichnet, dass** das Empfangen der Anzeigeinformationen umfasst:

Empfangen der Anzeigeinformationen durch einen Systeminformationsblock 1, SIB1,

wobei die wenigstens eine Zeit- und/oder Frequenzbereichsressource N anfängliche Uplink-, UL-, BWPs und N anfängliche Downlink-, DL-, BWPs umfasst;

wobei die Anzeigeinformationen ferner Konfigurationsinformationen, die sich auf N anfängliche Uplink-BWPs beziehen, und Konfigurationsinformationen anzeigen, die sich auf N anfängliche Downlink-BWPs beziehen,

wobei die Konfigurationsinformationen, die sich auf N anfängliche Uplink-BWPs beziehen, generische Parameter, Random-Access-Channel-, RACH-, Konfigurationsinformationen, gemeinsame Konfigurationsinformationen des Physical-Uplink-Shared-Channel, PUSCH, und gemeinsame Konfigurationsinformationen des Physical-Uplink-Control-Channel, PUCCH, umfassen,

wobei die Konfigurationsinformationen, die sich auf N anfängliche Downlink-BWPs beziehen, generische Parameter, gemeinsame Konfigurationsinformationen des Physical-Downlink-Control-Channel, PDCCH, und gemeinsame Konfigurationsinformationen des Physical-Downlink-Shared-Channel, PDSCH, umfassen,

wobei N eine ganze Zahl größer als 1 ist, wobei die Anzeigeinformationen den BWP für das RedCap-Endgerät angeben.

5. Verfahren nach Anspruch 4, wobei das RedCap-Endgerät weniger Antennen verwendet als ein Enhanced-Mobile-Broadband-, eMBB-, Endgerät/Ultra-Reliable-Low-Latency-Communications-, URLLC-, Endgerät.

6. Verfahren nach Anspruch 4, wobei das RedCap-Endgerät eine geringere Bandbreite unterstützt als ein Enhanced-Mobile-Broadband-, eMBB-, Endgerät/Ultra-Reliable-Low-Latency-Communications-, URLLC-, Endgerät.

7. Basisstation, umfassend: einen ersten Prozessor (92) und einen ersten Arbeitsspeicher (93), der dazu konfiguriert ist, ein Computerprogramm zu speichern, das auf dem Prozessor ausgeführt werden kann,

wobei der erste Prozessor (92) dazu konfiguriert ist, die Schritte eines Verfahrens nach einem der Ansprüche 1-3 auszuführen, wenn das Computerprogramm ausgeführt wird.

8. Endgerät, umfassend: einen zweiten Prozessor (102) und einen zweiten Arbeitsspeicher (103), der dazu konfiguriert ist, ein Computerprogramm zu speichern, das auf dem Prozessor ausgeführt werden kann,

wobei der zweite Prozessor (102) dazu konfiguriert ist, die Schritte eines Verfahrens nach einem der Ansprüche 4-6 auszuführen, wenn das Computerprogramm ausgeführt wird.

9. Computerlesbares Medium, auf dem ein Computerprogramm gespeichert ist, wobei das Computerprogramm, wenn es durch einen Prozessor einer Basisstation ausgeführt wird, die Schritte eines Verfahrens nach Ansprüchen 1-3 implementiert, oder, wenn es durch einen Prozessor eines Endgeräts ausgeführt wird, die Schritte eines Verfahrens nach Ansprüchen 4-6 ausführt.

## Revendications

1. Procédé de transmission d'informations, appliqué à une station de base et comprenant :
l'envoi (601) d'informations d'indication à un terminal, les informations d'indication indiquant :

   au moins une ressource de domaine temporel et/ou fréquentiel, dans lequel l'au moins une ressource de domaine temporel et/ou fréquentiel est utilisée pour permettre au terminal de déterminer une ressource de domaine temporel et/ou fréquentiel pour que le terminal reçoive des informations et/ou envoie des informations ; **caractérisé en ce que** l'envoi des informations d'indication au terminal comprend :

   l'envoi des informations d'indication au terminal par l'intermédiaire d'un bloc d'informations système 1, SIB1,
   dans lequel l'au moins une ressource de domaine temporel et/ou fréquentiel comprend N BWP de liaison montante, UL, initiales et N BWP de liaison descendante, DL, initiales ;
   dans lequel les informations d'indication indiquent en outre des informations de configuration relatives aux N BWP de liaison montante initiales, et des informations de configuration relatives aux N BWP de liaison descendante initiales, dans lequel les informations de configuration relatives aux N BWP de liaison montante initiale comprennent des paramètres génériques, des informations de configuration de canal d'accès aléatoire, RACH, des informations de configuration communes de canal partagé de liaison montante physique, PUSCH, et des informations de configuration commune de canal de commande de liaison montante physique, PUCCH,
   dans lequel les informations de configuration relatives aux N BWP de liaison descendante initiales comprennent des paramètres génériques, des informations de configuration communes de canal de commande de liaison descendante physique, PDCCH, et des informations de configuration communes de canal partagé de liaison descendante physique, PDSCH,
   dans lequel N est un nombre entier supérieur à 1,
   dans lequel les informations d'indication indiquent la BWP pour un terminal RedCap.

2. Procédé selon la revendication 1, dans lequel le terminal RedCap utilise moins d'antennes que le terminal à large bande mobile améliorée, eMBB/le terminal de communications à faible latence ultra-fiables, URLLC.

3. Procédé selon la revendication 1, dans lequel le terminal RedCap prend en charge une bande passante plus petite que le terminal à large bande mobile améliorée, eMBB/le terminal de communications à faible latence ultra-fiables, URLLC.

4. Procédé de réception d'informations appliqué à un terminal et comprenant :
la réception d'informations d'indication (501), les informations d'indication indiquant :

   au moins une ressource de domaine temporel et/ou fréquentiel, dans lequel l'au moins une ressource de domaine temporel et/ou fréquentiel est utilisée pour permettre au terminal de déterminer une ressource de domaine temporel et/ou fréquentiel pour que le terminal reçoive des informations et/ou envoie des informations ; **caractérisé en ce que** la réception des informations d'indication comprend :

   la réception des informations d'indication par l'intermédiaire d'un bloc d'informations système 1, SIB1,
   dans lequel l'au moins une ressource de domaine temporel et/ou fréquentiel comprend N BWP de liaison montante, UL, initiales et N BWP de liaison descendante, DL, initiales ;
   dans lequel les informations d'indication indiquent en outre des informations de configuration relatives aux N BWP de liaison montante initiales, et des informations de configuration relatives aux N BWP de liaison descendante initiales, dans lequel les informations de configuration relatives aux N BWP de liaison montante initiales comprennent des paramètres génériques, des informations de configuration de canal d'accès aléatoire, RACH, des informations de configuration communes de canal partagé de liaison montante physique, PUSCH, et des informations de configuration communes de canal de commande de liaison montante physique, PUCCH,
   dans lequel les informations de configuration relatives aux N BWP de liaison descendante initiales comprennent des paramètres génériques, des informations de configuration communes de canal de commande de liaison descendante physique, PDCCH, et des informations de configuration communes de canal partagé de liaison descendante physique, PDSCH,
   dans lequel N est un nombre entier supérieur à 1,

dans lequel les informations d'indication indiquent une BWP pour un terminal Red-Cap.

5. Procédé selon la revendication 4, dans lequel le terminal RedCap utilise moins d'antennes que le terminal à large bande mobile améliorée, eMBB/le terminal de communications à faible latence ultra-fiables, URLLC.

6. Procédé selon la revendication 4, dans lequel le terminal RedCap prend en charge une bande passante plus petite que le terminal à large bande mobile améliorée, eMBB/le terminal de communications à faible latence ultra-fiables, URLLC.

7. Station de base comprenant : un premier processeur (92) et une première mémoire (93) configurée pour stocker un programme informatique exécutable sur le processeur, dans laquelle le premier processeur (92) est configuré pour exécuter les étapes de tout procédé de l'une quelconque des revendications 1 à 3 lors de l'exécution du programme informatique.

8. Terminal comprenant : un deuxième processeur (102) et une deuxième mémoire (103) configurée pour stocker un programme informatique exécutable sur le processeur, dans lequel le deuxième processeur (102) est configuré pour exécuter les étapes de tout procédé de l'une quelconque des revendications 4 à 6 lors de l'exécution du programme.

9. Support lisible par ordinateur sur lequel est stocké un programme informatique, le programme informatique, lorsqu'il est exécuté par un processeur d'une station de base, mettant en œuvre les étapes de tout procédé des revendications 1 à 3, ou lorsqu'il est exécuté par le processeur d'un terminal mettant en œuvre les étapes de tout procédé des revendications 4 à 6.

SSB → Type0（Type0）- PDCCH → SIB1 → Random access

**FIG. 1**

Case A

| | |
|---|---|
| | 0 |
| | 0 |
| | 0 |
| | 0 |
| | 1 |
| | 0 |
| | 1 |
| | 0 |
| | 1 |

Case B

| | |
|---|---|
| | 1 |
| | 0 |
| | 1 |
| | 0 |
| | 1 |
| | 0 |
| | 0 |
| | 0 |

Case C

| | |
|---|---|
| | 1 |
| | 0 |
| | 1 |
| | 0 |
| | 1 |
| | 0 |
| | 0 |
| | 0 |

**FIG. 2**

PR
AC

PR

AC

PR
AC

PR
AC

SIB1

PR

AC

**FIG. 3**

**FIG. 4**

```
┌─────────────────────────────────────────────────────────┐
│                                                         │ ╱ 501
│          Indication information is received             │╱
│                                                         │
└─────────────────────────────────────────────────────────┘
                            │
                            ▼
┌─────────────────────────────────────────────────────────┐
│   Corresponding operations are performed according to the│ ╱ 502
│                 indication information                   │╱
│                                                         │
└─────────────────────────────────────────────────────────┘
```

**FIG. 5**

A network device sends indication information to a terminal ⟋ 601

The terminal receives the indication information, and performs corresponding operations based on the indication information ⟋ 602

**FIG. 6**

72

71

First
determining
unit

Sending
unit

**FIG. 7**

81                                          82

| Receiving unit | Second determining unit |

**FIG. 8**

Network
device

90

93

92

First processor

94

First memory

91

First
communication
interface

**FIG. 9**

Terminal 100

103

Second processor 102

104

Second memory

Second communication interface 101

## FIG. 10

**FIG. 11**

**EP 4 106 427 B1**

**REFERENCES CITED IN THE DESCRIPTION**

**Patent documents cited in the description**

- EP 3471469 A1

- WO 2020032771 A1